# EUROPEAN PATENT SPECIFICATION

(11) **EP 4 449 377 B1**
(45) Date of publication and mention of the grant of the patent: **28.01.2026**
(21) Application number: 22834912.2
(22) Date of filing: 08.12.2022
(51) Int. Cl.: G06V 20/56, B60W 30/12, B60W 30/165, B60W 50/14

(54) **METHOD FOR OPERATING A VEHICLE, COMPUTER PROGRAM, CONTROL SYSTEM AND VEHICLE**
VERFAHREN ZUM BETREIBEN EINES FAHRZEUGS, COMPUTERPROGRAMM, STEUERUNGSSYSTEM UND FAHRZEUG
PROCÉDÉ DE FONCTIONNEMENT D'UN VÉHICULE, PROGRAMME INFORMATIQUE, SYSTÈME DE COMMANDE ET VÉHICULE

(30) Priority: 14.12.2021 DE 102021132924
(43) Date of publication of application: 23.10.2024
(73) Proprietor: Valeo Schalter und Sensoren GmbH, 74321 Bietigheim-Bissingen (DE)
(72) Inventor: GEORGE, Ashwin-Dayal, 74321 Bietigheim-Bissingen (DE); NABIL, Ashraf, Giza Cairo, 12577 (EG)
(74) Representative: Jauregui Urbahn, Kristian
(86) International application number: PCT/EP2022/084900
(87) International publication number: WO 2023/110601

(56) References cited:
- US-A1- 2017 068 248
- US-A1- 2018 025 646
- US-A1- 2018 074 492

## Description

The present invention relates to a method for operating a vehicle, a computer program, a control system and a vehicle with such a control system.

Modern vehicles, such as passenger vehicles, are nowadays usually equipped with several driver assistant systems. An example is a lane keeping system which detects a lane of a road on which a vehicle is driving based on sensor data and positions the vehicle within the delineations of the lane. Lane keeping systems rely primarily on the detection of lane markings on the road. A problem occurs if no lane markings are present on the road. US 2019 382 008 A1 proposes a method for lane keeping in cases where no lane markings are detected based on an extrapolation of the last detected lane markings. US 2017/068248 A1, US 2018/074492 A1 and US 2018/025646 A1 show comparable vehicle control systems.

It is one object of the present invention to provide an improved method for operating a vehicle.

Accordingly, a method for operating a vehicle is provided. The method comprises the steps:
a) receiving sensor data of a sensor system of the vehicle,
b) detecting an absence of lane markings based on the sensor data,
c) transmitting instructions to a human machine interface of the vehicle to prompt a driver of the vehicle to drive to a perceived center line of a lane,
d) determining a virtual lane based on the perceived center line to which the driver has driven, and
e) performing a lane keeping assistant function to keep the vehicle on the virtual lane.

In cases in which no lane markings are detected in the sensor data, the driver might be in a better position to perceive and understand the overall scenario. Thus, by prompting the driver to drive the vehicle to a perceived center line of a lane and using the position to which the driver has driven the vehicle as input for determining a virtual lane, a lane keeping assistant function can be provided also in cases in which no lane markings are detected in the sensor data. Hence, a control system of the vehicle (e.g., a lane keeping system) receives feedback from the driver regarding the location of the correct lane and can learn from this feedback.

For example, on a highway with two or more lanes on which left and right delineations of the highway are visible due to the presence of left and right crash barriers but no lane markings are available, the lane keeping system may be able to determine a curvature of a lane based on detecting the crash barriers but may not be able to determine a lateral position of a lane on which the vehicle is driving or should be driven. Here, it may be easier for the driver to perceive a correct lateral position of a lane.

The method steps are, in particular, carried out by a control system of the vehicle. The control system is, for example, outputting an instruction to a steering system of the vehicle in accordance with the determined virtual lane. The instruction is, for example, an instruction to steer towards a center line of the virtual lane.

The sensor system of the vehicle (ego-vehicle) is, in particular, an environmental sensor system comprising one or more environmental sensor units. The sensor units are configured to detect a driving state of the vehicle and an environment of the vehicle. Examples of such sensor units are a camera device for capturing images of the surrounding, a radar device (radio detection and ranging) for obtaining radar data and a lidar device (light detection and ranging) for obtaining lidar data. The sensor system may in addition include ultrasonic sensors, location sensors, wheel angle sensors and/or wheel speed sensors. The sensor units are each configured to output a sensor signal, for example to a driving assistance system or a parking assistance system, which for example performs assisted or (semi-)autonomous driving as a function of the detected sensor signals. In particular, the sensor units can each be configured to output a sensor signal to a control system and/or a lane keeping system of the vehicle, which performs automatic lane keeping control as a function of the detected sensor signals.

For example, the presence or absence of lane markings of a road may be detected based on images (as an example of sensor data) of a camera device of the vehicle. The camera device is, for example, a front camera arranged at the front windscreen of the vehicle and configured to monitor an area in front of the vehicle. However, the camera device may also be arranged at a different window of the vehicle and/or monitor a different area, e.g., at the sides and/or behind the vehicle.

The human machine interface (HMI) of the vehicle includes, for example, one or more displays, one or more touch panels, one or more keyboards, one or more buttons, one or more (rotary) knobs, one or more loudspeaker, one or more microphones and/or one or more driver monitoring cameras.

The perceived center line to which the driver has driven the vehicle can, for example, be used as a starting position and/or direction for determining the virtual lane. The perceived center line to which the driver has driven the vehicle can, for example, be used as one of several inputs used for determining the virtual lane.

The vehicle is, for example, a passenger car, a van or a truck. The vehicle is, for example, configured for assisted, semi-autonomous and/or fully autonomous driving. A level of automatization of the vehicle is, for example, any of a level 1 or 2 (hands-on system) to a level 5 (fully automatic). Said levels 1 to 5 correspond to the SAE classification system published in 2014 from SAE International as J3016 ("Taxonomy and Definitions for Terms Related to On-Road Motor Vehicle Automated Driving Systems").

Determining the virtual lane includes, for example, determining a center line and a lane width of the virtual lane. The center line starts, for example, at a front end (e.g., a front bumper) of the vehicle (ego-vehicle). In case that a preceding target vehicle is detected, the center line may, for example, extend at least to a back end (e.g., a back bumper) of the preceding target vehicle.

In embodiments, in step d) of the method, the virtual lane is determined based on - in addition to the perceived center line to which the driver has driven - one or more object(s) in the vicinity of the vehicle (ego-vehicle). In this case, the method may comprise a step of detecting the one or more objects in the vicinity of the vehicle based on the sensor data. The method may further comprise a step of determining positional information of the one or more objects based on the sensor data. Furthermore, the virtual lane may be determined based on - in addition to the perceived center line to which the driver has driven - the positional information of the one or more objects in the vicinity of the vehicle.

According to an embodiment, the method comprises the step of detecting a presence of one or more other vehicles in a region of interest based on the sensor data, wherein the virtual lane is determined based on positional information of the one or more other vehicles with respect to the ego-vehicle, the positional information being determined based on the sensor data.

In addition to the driver's perceived center line, determining the virtual lane based also on positional information of detected other vehicles in the region of interest can result in better virtual lane estimation.

The method includes, in particular, the step of determining the positional information (positional data) of the one or more other vehicles based on the sensor data. The positional information of the one or more other vehicles are, for example, determined relative to the position of the ego-vehicle.

The positional information of a respective other vehicle includes, for example, a lateral distance between the respective vehicle and the ego-vehicle and/or a direction of travel (e.g., heading angle) of the respective vehicle with respect to the ego-vehicle. The lateral distance is, for example, a lateral distance between a central lateral position of a respective other vehicle and a central lateral position of the ego-vehicle (this applies, in particular, in the case of a preceding target vehicle). Alternatively, the lateral distance is, for example, a lateral distance of a space between a respective other vehicle and the ego-vehicle (this applies, in particular, in the case of a left/right target vehicle). The heading angle is, in particular, an angle of a current travel direction of the respective vehicle with respect to a heading angle of the current travel direction of the ego-vehicle. The positional information of a respective other vehicle includes, for example, a trajectory of the respective vehicle.

The region of interest is, for example, a region ahead of the ego-vehicle. A width of the region of interest includes, for example, a width of the road on which the ego-vehicle is driving. A width of the region of interest is, for example, 12 meters or smaller, 10 meters or smaller, 8 meters or smaller and/or 6 meters or smaller. A length of the region of interest is, for example, 100 meters or smaller, 90 meters or smaller, 80 meters or smaller and/or 70 meters or smaller.

The lane keeping assistant function is, for example, performed such that the virtual lane is repeatedly determined based on repeatedly updated positional information of the identified target vehicles (i.e., a preceding target vehicle, a left target vehicle and/or a right target vehicle) to keep the ego-vehicle on the repeatedly updated virtual lane.

By using more than one target vehicle for determining the virtual lane, the virtual lane can be better estimated and depends less on the movement of a single other vehicle.

According to a further embodiment, the method comprises the steps of:
f) determining, after the driver has driven to the perceived center line, a driving channel of the ego-vehicle based on the sensor data, wherein a length of the driving channel corresponds to a driving distance of the ego-vehicle in a predetermined time span, a width of the driving channel corresponds to a predetermined vehicle width, and the region of interest includes the driving region at least partly,
g) determining a percentage of an overlap between the determined driving channel and a vehicle detected in the region of interest and preceding the ego-vehicle,
h) determining that the preceding vehicle is driving on the same lane as the ego-vehicle and is a preceding target vehicle when the determined percentage of the overlap is above a predetermined value, and
i) determining the virtual lane based on the positional information of the preceding target vehicle.

By determining the driving channel of the ego-vehicle and checking if other vehicles in the region of interest are (partly) overlapping the driving channel, it is possible to identify a vehicle in the region of interest as being a preceding vehicle on the same lane as the ego-vehicle. In particular, an overlap by a percentage above the predetermined value indicates a suitability of the preceding vehicle as target vehicle for determining the virtual lane.

The driving channel describes, in particular, the current path of the ego-vehicle after the driver has steered to the perceived lane center.

The driving channel is, in particular, a two-dimensional region (e.g., defined by its width and length). The driving channel is, in particular, a two-dimensional geometrical region arranged parallel to a plane of a road on which the vehicle is driving.

The overlap between the determined driving channel and the respective vehicle is, for example, an overlap of a region occupied by the preceding vehicle and a region of the driving channel. The region occupied by the preceding vehicle is, in particular, a two-dimensional region. The region occupied by the preceding vehicle is, in particular, arranged in the same plane as the driving channel.

The overlap between the determined driving channel and the respective vehicle is, for example, an overlap in a lateral direction.

Determining the driving channel after the driver has driven to the perceived center line may include determining the driving channel after the driver has confirmed that s/he has driven to the perceived center line.

The width of the driving channel corresponding to a predetermined vehicle width corresponds, for example, to a width of the ego-vehicle.

The predetermined value of step h) is for example, 20%, 30%, 40%, 50% or 60%.

According to a further embodiment,
when it is determined that the percentage of the overlap is equal to or below the predetermined value and above a further predetermined value, step c) and steps g) to i) are repeated, the further predetermined value being smaller than the predetermined value, and
when it is determined that the percentage of the overlap is equal to or below the further predetermined value, it is determined that the preceding vehicle is unsuitable for determining the virtual lane.

In the case that the percentage of the overlap between the determined driving channel and the vehicle detected in the region of interest and preceding the ego-vehicle is equal to or below the predetermined value, the overlap is too small for assuming that the other vehicle is driving on the same lane. In this case, by repeating step c), the driver is prompted to reposition the vehicle by driving (again) to the perceived center line of the lane. Then, the percentage of the overlap is determined again.

The further predetermined value is, for example, larger than zero and/or 1%, 5%, 10%, 15% or 20%.

In embodiments, when it is determined that the preceding vehicle is unsuitable for determining the virtual lane and/or no preceding vehicle is present, but the driver has still driven to a perceived centerline, the virtual lane may be determined based on one or more other vehicles on the left and/or right side of the vehicle (ego-vehicle).

According to a further embodiment, the method comprises the steps of:
determining a lateral distance between each of the one or more other vehicles detected in the region of interest and the ego-vehicle based on the sensor data, the lateral distance including a left lateral distance with respect to a left side of the ego-vehicle and a right lateral distance with respect to a right side of the ego-vehicle,
determining that a respective other vehicle is driving on a left neighboring lane with respect to the ego-vehicle and is a left target vehicle, when the determined left lateral distance thereof is above a predetermined threshold, and determining that a respective other vehicle is driving on a right neighboring lane with respect to the ego-vehicle and is a right target vehicle, when the determined right lateral distance thereof is above the predetermined threshold, and
determining the virtual lane based on the positional information of the left and/or right target vehicles on the left and/or right neighboring lanes.

Thus, it is investigated if one or more of the other vehicles detected in the region of interest are driving on a left or right neighboring lane with respect to the ego-vehicle. In particular, a suitability of each of the other vehicles as further target vehicles (i.e., left target vehicle or right target vehicle) for lane keeping is analyzed.

The predetermined threshold is, for example, larger than half of the width of the driving channel. In other words, the predetermined threshold is set such that only vehicles outside of the driving channel of the ego-vehicle are determined as vehicles on a left or right neighboring lane.

By determining the virtual lane based on the positional information of the left and/or right target vehicles, the lane keeping function of the ego-vehicle can be performed such that the ego-vehicle is maintaining a lateral safety distance to the left and/or right target vehicles. If both a left and right target vehicle are present, the lane keeping function of the ego-vehicle can be performed such that the ego-vehicle is driving laterally (in the middle or not in the middle) between the left and right target vehicles.

According to a further embodiment, determining the virtual lane includes determining a left delineation of the virtual lane based on the positional information of the left target vehicle and/or determining a right delineation of the virtual lane based on the positional information of the right target vehicle.

For example, the left delineation of the virtual lane is determined such that a distance between the driving channel and the left delineation is larger than a predetermined lateral safety threshold. Further, the right delineation of the virtual lane is determined such that a distance between the driving channel and the right delineation is larger than the predetermined lateral safety threshold.

According to a further embodiment, a center line of the virtual lane is determined based on a first preliminary center line and/or a second preliminary center line, the first preliminary center line being derived based on a detected preceding target vehicle and the second preliminary center line being derived based on detected left and/or right target vehicles.

Thus, the virtual lane is determined based on positional information of both a preceding vehicle on the same lane as the ego-vehicle and one or more left and/or right target vehicles on neighboring lanes.

According to a further embodiment, the center line of the virtual lane is determined based on a mean and/or weighted mean value of the first preliminary center line and the second preliminary center line.

The center line of the virtual lane is, for example, determined based on a mean and/or weighted mean value of a heading angle of the preceding target vehicle and a heading angle of each of the one or more left and/or right target vehicles.

The center line of the virtual lane is, for example, determined by taking into account a lateral position of the preceding target vehicle and a lateral position of each of the one or more left and/or right target vehicles, the lateral positions being lateral positions with respect to the ego-vehicle.

The virtual lane is, for example, determined based on a mean and/or weighted mean trajectory of the trajectories of the preceding target vehicle and each of the one or more left and/or right target vehicles.

According to a further embodiment,
when a preceding target vehicle is detected, the first preliminary center line of the virtual lane is determined based on a lateral distance between the preceding target vehicle and the ego-vehicle,
when a left target vehicle and a right target vehicle are detected, the second preliminary center line of the virtual lane is determined such that a lateral distance between the second preliminary center line and the left target vehicle equals a lateral distance between the second preliminary center line and the right target vehicle, and/or
when a left target vehicle and/or a right target vehicle are detected, the second preliminary center line of the virtual lane is determined such that a lateral distance between the ego-vehicle and the left target vehicle is above a predetermined safety distance and/or such that a lateral distance between the ego-vehicle and the right target vehicle is above the predetermined safety distance.

According to a further embodiment,
a lane width of the virtual lane is determined such that it equals a sum of the predetermined vehicle width, a left offset value and a right offset value, and
the left offset value is determined based on the determined lateral distance between the ego-vehicle and the left target vehicle, or
the left offset value is set equal to a predetermined value, and/or
the right offset value is determined based on the determined lateral distance between the ego-vehicle and the right target vehicle, or
the right offset value is set equal to a predetermined value.

For example, if a left target vehicle is detected, the left offset value is determined based on the determined lateral distance between the ego-vehicle and the left target vehicle. If no left target vehicle is detected, the left offset value is set equal to the predetermined value. The same applies, mutatis mutandis, to the right target vehicle.

According to a further embodiment, step c) includes:
transmitting instructions to the human machine interface to output a question to the driver if the driver is willing to drive to a perceived center line of a lane,
receiving an information of the human machine interface corresponding to an answer of the driver, and
transmitting, when the received information corresponds to a positive answer, instructions to the human machine interface to prompt the driver to confirm that the driver has driven to the perceived center line of the lane.

Thus, only when the driver has confirmed that the current position of the vehicle corresponds to the perceived center line of the lane, the virtual lane is determined based on this position.

According to a further embodiment, the method comprises the steps of:
performing an adaptive cruise control based on a detected preceding target vehicle such that a longitudinal distance between the ego-vehicle and the preceding target vehicle is controlled to have a predetermined distance value, and/or
performing a cruise control based on detected left and/or right target vehicles such that a speed of the ego-vehicle is controlled based on a speed of the left and/or right target vehicles.

According to a second aspect, a computer program is provided. The computer program comprises instructions which, when the program is executed by a computer, cause the computer to carry out the above-described method.

A computer program (computer program product), such as a computer program means, may be embodied as a memory card, USB stick, CD-ROM, DVD or as a file which may be downloaded from a server in a network. For example, such a file may be provided by transferring the file comprising the computer program product from a wireless communication network.

According to a third aspect, a control system for a vehicle is provided. The control system is configured to perform the above-described method.

The control system is, for example, a lane keeping system or is part of a lane keeping system.

According to a fourth aspect, a vehicle with an above-described control system is provided.

The respective above or below described entities, e.g., the control system, a receiving unit, a detecting unit, a communication unit, a determining unit, a lane keeping unit, an output unit, may be implemented in hardware and/or in software. If said entity is implemented in hardware, it may be embodied as a device, e.g. as a computer or as a processor or as a part of a system, e.g. a computer system. If said entity is implemented in software it may be embodied as a computer program product, as a function, as a routine, as an algorithm, as a program code, part of a program code or as an executable object. Furthermore, each of the entities mentioned above can also be designed as part of a higher-level control system of the vehicle, such as a central electronic control unit (ECU).

The embodiments and features described with reference to the method of the present invention apply, mutatis mutandis, to the computer program, the control system and the vehicle of the present invention.

Further possible implementations or alternative solutions of the invention also encompass combinations - that are not explicitly mentioned herein - of features described above or below with regard to the embodiments. The person skilled in the art may also add individual or isolated aspects and features to the most basic form of the invention.

Further embodiments, features and advantages of the present invention will become apparent from the subsequent description and dependent claims.

In the following, the invention will be described in detail based on preferred embodiments with reference to the following figures.
- Fig. 1: shows a top view of a vehicle according to an embodiment;
- Fig. 2: shows the vehicle of Fig. 1 and other vehicles on a road;
- Fig. 3: shows a view similar as Fig. 2 with an illustration of a determined virtual lane;
- Fig. 4: shows a view similar as Fig. 3 with a different arrangement of the vehicles;
- Fig. 5: shows a control system of the vehicle of Fig. 1; and
- Fig. 6: shows a flowchart illustrating a method for operating the vehicle of Fig. 1.

In the figures, like reference numerals designate like or functionally equivalent elements, unless otherwise indicated.

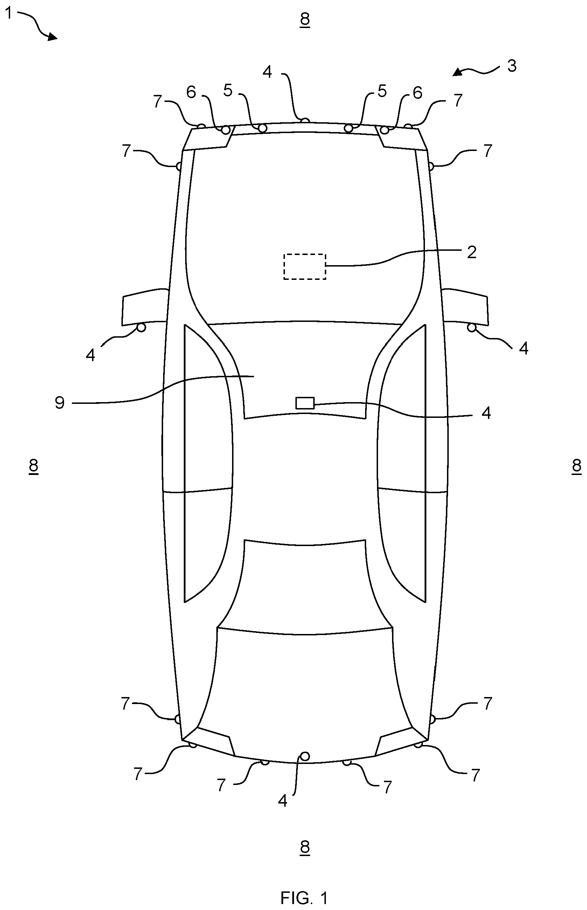

Fig. 1 shows a schematic top view of a vehicle 1. The vehicle 1 is, for example, a passenger vehicle. The vehicle 1 may also be another kind of vehicle such as a van or truck. The vehicle 1 comprises a control system 2 for controlling the vehicle 1. The control system 2 is, in particular, a lane keeping system.

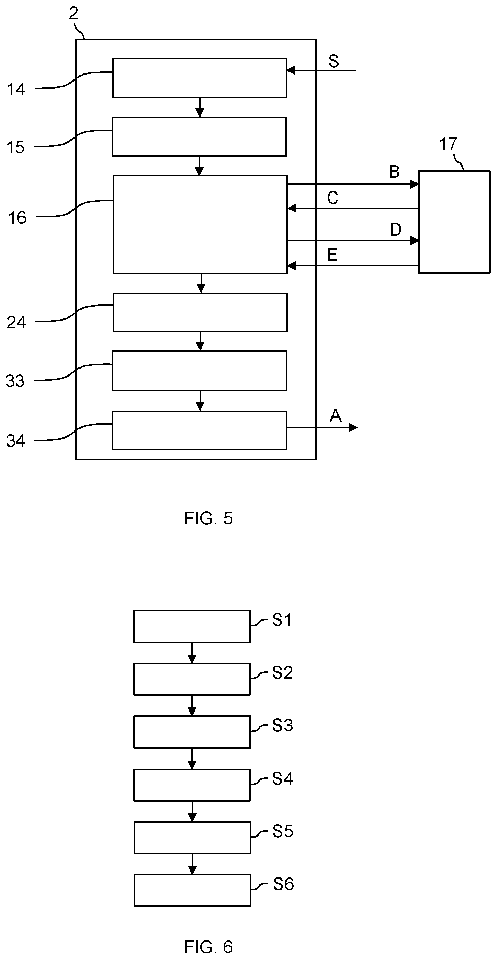

The vehicle 1 further comprises an electronically controllable steering system (not shown). The control system 2 is configured to transmit instructions A (Fig. 5) to the steering system for lane keeping purposes.

As shown in Fig. 1, the vehicle 1 comprises a sensor system 3 including several environmental sensor units 4, 5, 6, 7 arranged at the vehicle 1. The sensor system 3 comprise, in particular, one or more camera devices 4 such as one or more front camera devices. The camera devices 4 are configured for obtaining image data of a surrounding 8 of the vehicle 1 and for transmitting the image data or results of an image analysis of the image data to the control unit 2. The front camera device 4 is attached to a front windscreen 9 of the vehicle 1.

The sensor system 3 further comprise, for example, one or more radar devices 5 for obtaining radar data of the surrounding 8 of the vehicle 1. The sensor system 3 may further comprise, for example, one or more lidar devices 6 for obtaining lidar data of the surrounding 8 of the vehicle 1.

The sensor system 3 may comprise further sensors such as ultrasonic sensors 7, rain sensors, light sensors, wheel sensors and/or wheel speed sensors (not shown).

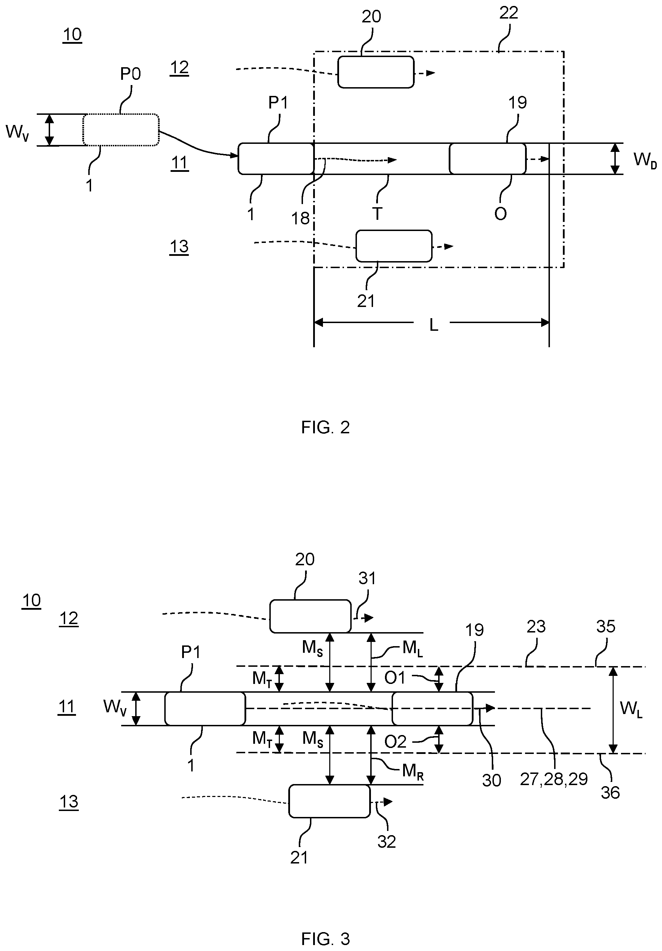

In the following, a method for operating the vehicle 1 will be described with reference to Figs. 2 to 6. The method is, in particular, a method for performing a lane keeping assistant function.

Fig. 2 shows the vehicle 1 of Fig. 1 on a road 10. The road 10 comprises three lanes 11, 12, 13 but there are no lane markings on the road 10. Hence, a lane keeping function based on detected lane markings cannot be performed by the lane keeping system (control system 2). In Fig. 2, the vehicle 1 (ego-vehicle 1) is shown on two different positions P0 and P1.

In a first step S1 of the method, the control system 2 of the vehicle 1 receives sensor data S (Fig. 5) of the sensor system 3 (Fig. 1) of the vehicle 1. The sensor data S comprise, in particular, data from a camera device 4 (Fig. 1) of the vehicle 1. The sensor data S may also comprise, for example, data from a radar device 5 and/or data from a lidar device 6 of the vehicle 1. The control system 2 comprises, for example, a receiving unit 14 (Fig. 5) for receiving the sensor data S from the sensor system 3.

In a second step S2 of the method, the control system 2 detects an absence of lane markings on the road 10 based on the sensor data S. The control system 2 comprises, for example, a detecting unit 15 (Fig. 5) for detecting the absence of lane markings based on the sensor data S.

In a third step S3 of the method, the control system 2 transmits instructions B to a human machine interface 17 (HMI-unit 17, Fig. 5) of the vehicle 1 to prompt a driver of the vehicle 1 to drive to a perceived center line 18 of a lane 11 (Fig. 2). The control system 2 comprises, for example, a communication unit 16 (Fig. 5) for transmitting the instructions B to the HMI-unit 17.

For example, the control system 2 (e.g., communication unit 16) transmits instructions B to the HMI-unit 17 to output a question to the driver if the driver is willing to drive to a perceived center line 18 of a lane 11. The question is, for example, output by the HMI-unit 17 by visual and/or audio notification. Further, the control system 2 (e.g., communication unit 16) receives an information C of the HMI-unit 17 corresponding to an answer of the driver. The information C (answer C) of the driver is, for example, "Yes". The answer C can be input by the driver, for example, by touching a respective field of a touch panel, pushing a button, turning a knob, saying one or more words and/or making a gesture. Furthermore, the driver is then driving from an initial position P0 to a position P1 (Fig. 2). Next, the control system 2 (e.g., the communication unit 16) transmits instructions D to the HMI-unit 17 (Fig. 5) to prompt the driver to confirm that the driver has driven to the perceived center line 18 of the lane 11. The driver can then input an answer E as confirmation.

In a fourth step S4 of the method, the control system 2 (e.g., the detecting unit 15) detects a presence of one or more other vehicles 19, 20, 21 on the road 10 on which the vehicle 1 (ego-vehicle 1) is driving based on the sensor data S. The other vehicles 19, 20, 21 are, in particular, detected in a region of interest 22. In the shown example of Fig. 2, there is a preceding vehicle 19 on the same lane 11 as the ego-vehicle 1 present. Further, there is a vehicle 20 on a left neighboring lane 12 and a vehicle 21 on a right neighboring lane 13 present.

The control system 2 (e.g., the detecting unit 15) determines, for example, positional data of each of the vehicles 19, 20, 21 with respect to the position P1 of the ego-vehicle 1 based on the sensor data S.

In a fifth step S5 of the method, the control system 2 determines a virtual lane 23 (Fig. 3) based on the perceived center line 18 to which the driver has driven and based on the positional data determined for the vehicles 19, 20, 21. The control system 2 comprises, for example, a determining unit 24 (Fig. 5) for determining the virtual lane 23.

Firstly, the control system 2 searches for a suitable target vehicle 19 preceding the ego-vehicle 1. In particular, after the driver has driven to the perceived center line 18 (Fig. 2), the control system 2 determines a driving channel T of the ego-vehicle 1. A length L of the driving channel T corresponds to a driving distance of the ego-vehicle 1 in a predetermined time span. The predetermined time span is, for example, included in a range of 0.5 to 2 seconds, 0.8 to 1.2 seconds and/or is equal to or below 1 second. The length L is determined based on the predetermined time span and a measured speed of the ego-vehicle 1. The speed is measured based on sensor data S (e.g., wheel speed sensor data) of the sensor system 3 of the ego-vehicle 1. A width W_{D} of the driving channel T corresponds to a predetermined vehicle width W_{V} of the ego-vehicle 1. The width W_{D} of the driving channel T is, for example, equal to the predetermined vehicle width W_{V} or is slightly larger (e.g., 10%, 20% or 30% larger) as the predetermined vehicle width W_{V}. The region of interest 22 includes the driving channel T at least partially.

Further, the control system 2 determines a percentage of an overlap O between the determined driving channel T and the preceding vehicle 19. In the shown example of Fig. 2, the percentage of the overlap O between the determined driving channel T and the preceding vehicle 19 is 100%. If the determined percentage of the overlap O is above a predetermined value (e.g., 30%), it is determined that the preceding vehicle 19 is driving on the same lane 11 as the ego-vehicle 1. The vehicle 19 shown in Fig. 2 is, thus, classified as preceding target vehicle 19 suitable for lane keeping purposes.

In a different example, in which a percentage of the overlap O is equal to or below the predetermined value (e.g., 30%) and above a further predetermined value (e.g., 10%), the driver is prompted to reposition the ego-vehicle 1. Next, the above-described suitability test by determining the overlap O is repeated. Then, the vehicle 19 is either classified as preceding target vehicle 19 suitable for lane keeping purposes or it is determined that the preceding vehicle 19 is unsuitable for determining the virtual lane 23.

Secondly, the control system 2 searches for suitable left and/or right target vehicles 20, 21. In particular, the control system 2 determines a lateral distance M_{L}, M_{R} (Fig. 3) between each of the vehicles 20, 21 detected in the region of interest 22 and the ego-vehicle 1 based on the sensor data S. The lateral distance M_{L}, M_{R} includes a left lateral distance M_{L} with respect to a left side 25 of the ego-vehicle 1 and a right lateral distance M_{R} with respect to a right side 26 of the ego-vehicle 1.

Next, the control system 2 determines that a respective other vehicle 20 is driving on a left neighboring lane 12 (left target vehicle 20) with respect to the ego-vehicle 1, when the determined left lateral distance M_{L} between the ego-vehicle 1 and the respective vehicle 20 is above a predetermined threshold. Further, the control system 2 determines that a respective other vehicle 21 is driving on a right neighboring lane 13 with respect to the ego-vehicle 1 (right target vehicle 21), when the determined right lateral distance M_{R} between the ego-vehicle 1 and the respective vehicle 21 is above the predetermined threshold. Thus, the vehicle 20 shown in Fig. 3 is classified as a left target vehicle 20 suitable for lane keeping purposes, and the vehicle 21 shown in Fig. 3 is classified as a right target vehicle 21 suitable for lane keeping purposes.

Hence, in the shown example of Figs. 2 and 3, there are three suitable target vehicles 19, 20, 21 such that the virtual lane 23 can be determined advantageously based on the positional data of the three target vehicles 19, 20, 21.

Next, the virtual lane 23 is determined, for example, by determining a left delineation 35 (Fig. 3) of the virtual lane 23 based on the positional information M_{L}, 31 of the left target vehicles 20 and/or determining a right delineation 36 of the virtual lane 23 based on the positional information M_{R}, 32 of the right target vehicles 21. For example, the left delineation 35 of the virtual lane 23 is determined such that a lateral distance M_{T} between the driving channel T and the left delineation 35 is larger than a predetermined lateral threshold. Further, the right delineation 36 of the virtual lane 23 is determined such that a distance M_{T} between the driving channel T and the right delineation 36 is larger than the predetermined lateral threshold. If both a left and right target vehicle 20, 21 are present, the lane keeping function of the ego-vehicle 1 can be performed such that the ego-vehicle 1 is driving laterally (in the middle or not in the middle) between the left and right target vehicles 20, 21.

Furthermore, for example, a first preliminary center line 27 (Fig. 3) is derived based on the detected preceding target vehicle 19 and a second preliminary center line 28 is derived based on the detected left and right target vehicles 20, 21. Then, a center line 29 of the virtual lane 23 is determined based on the first and second preliminary center lines 27, 28. In the shown example of Figs. 2 and 3, a symmetric situation is illustrated in which the first preliminary center line 27 and the second preliminary center line 28 are identical. However, in other (more realistic) situations, the first and second preliminary center lines 27, 28 may not be identical. In such a non-symmetric situation, the center line 29 of the virtual lane 23 may be determined based on a mean value or weighted mean value of the first and second preliminary center lines 27, 28.

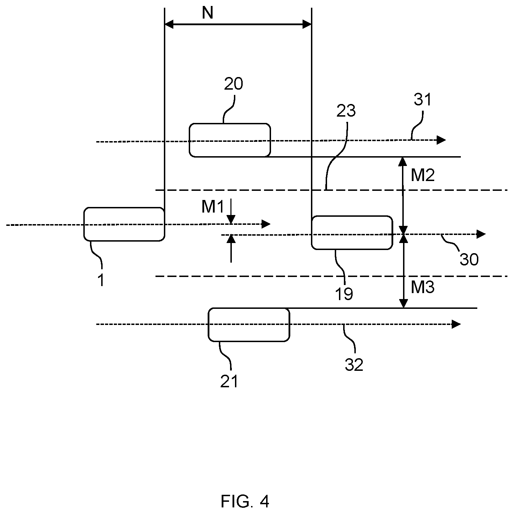

The first preliminary center line 27 of the virtual lane 23 is, for example, determined based on a lateral distance M1 (Fig. 4) between the preceding target vehicle 19 and the ego-vehicle 1 and/or based on a trajectory 30 (Fig. 3) of the preceding target vehicle 19. It is noted that in Fig. 3, a situation is shown in which a lateral distance between the preceding target vehicle 19 and the ego-vehicle 1 is zero, while in Fig. 4 a situation is shown in which the lateral distance M1 between the preceding target vehicle 19 and the ego-vehicle 1 is greater than zero.

Further, the second preliminary center line 28 of the virtual lane 23 is, for example, determined such that a lateral distance M2 (Fig. 4) between the second preliminary center line 28 and the left target vehicle 20 equals a lateral distance M3 between the second preliminary center line 28 and the right target vehicle 21. In other words, the second preliminary center line 28 is a middle line between trajectories 31, 32 of the left and right target vehicles 20, 21.

In a case in which only one of the left and right target vehicles 20, 21 is present, the second preliminary center line 28 may also be determined such that a lateral distance M_{L}, M_{R} (Fig. 3) between the ego-vehicle 1 and the respective left or right target vehicle 20, 21 is equal to or above a predetermined safety distance M_{S}.

As illustrated in Fig. 3, a lane width W_{L} of the virtual lane 23 is determined such that it equals a sum of the predetermined vehicle width W_{V}, a left offset value O1 (left lateral offset value) and a right offset value O2 (right lateral offset value). If a left target vehicle 20 has been detected, the left offset value O1 is, for example, determined based on the determined lateral distance M_{L} between the ego-vehicle 1 and the left target vehicle 20 (e.g., O1 = ½ M_{L}). If no suitable target vehicle has been detected on the left lane 12, the left offset value O1 is set equal to a predetermined value. Further, if a right target vehicle 21 has been detected, the right offset value O2 is, for example, determined based on the determined lateral distance M_{R} between the ego-vehicle 1 and the right target vehicle 21 (e.g., O2 = ½ M_{R}). If no suitable target vehicle has been detected on the right lane 13, the right offset value O2 is set equal to a predetermined value.

In step S6 of the method, the control system 2 performs a lane keeping assistant function to keep the ego-vehicle 1 on the determined virtual lane 23. The control system 2 comprises, for example, a lane keeping unit 33 (Fig. 5) for performing the lane keeping assistant function. The control system 2 further comprises, for example, an output unit 34 (Fig. 5) for outputting instructions A to a steering system (not shown) of the ego-vehicle 1 to steer the ego-vehicle towards the center line 29 of the determined virtual lane 23.

Further, if a preceding target vehicle 19 is detected, an adaptive cruise control based on the detected preceding target vehicle 19 may be performed such that a longitudinal distance N (Fig. 4) between the ego-vehicle 1 and the preceding target vehicle 19 is controlled to have a predetermined distance value.

If only a preceding target vehicle 19 but no left and/or right target vehicles 20, 21 are detected and if the preceding target vehicle 19 begins to steer away, for example, performs a lane change, the control system 2 may detect that the preceding target vehicle 21 steers away, for example, based on a determined lateral speed of the preceding target vehicle 19 being above a predetermined speed threshold. In this case, the control system 2 may relinquish determining the virtual lane 23 based on the preceding target vehicle 19 and send instructions to the HMI-unit 17 to notify the driver, for example by means of a visual and/or audio notification. When the ego-vehicle 1 is approaching a newly preceding vehicle (not shown), the control system 2 may determine if the newly preceding vehicle is suitable as preceding target vehicle (determine percentage of overlap O) and determine the virtual lane 23 based on positional data of the newly preceding vehicle.

Further, if left and/or right target vehicles 20, 21 are detected, a cruise control based on the detected left and/or right target vehicles 20, 21 may be performed such that a speed of the ego-vehicle 1 is controlled based on a speed of the left and/or right target vehicles 20, 21.

To summarize, although there are no lane markings on the road 10 available (Fig. 2), a lane keeping assistant function can still be provided by the control system 2 by determining a virtual lane 23 (Fig. 3). In particular, the virtual lane 23 is derived based on a driver of the vehicle 1 driving to a perceived center line 18 of a lane 11 (Fig. 2). Thus, the driver who might be in a better position to perceive and understand the overall scenario is providing feedback to the control system 2 where the correct lane 11 might be located. Furthermore, the virtual lane 23 may, in addition to the driver's feedback, also be determined based on positional data M₁, M_{L}, M_{R}, 30, 31, 32 of other vehicles 19, 20, 21 in the region of interest 22 (Fig. 2). Hence, lane keeping functionality can be improved.

Although the present invention has been described in accordance with preferred embodiments, it is obvious for the person skilled in the art that modifications are possible in all embodiments.

### LIST OF REFERENCE SIGNS

- 1: vehicle
- 2: control system
- 3: sensor system
- 4: sensor unit
- 5: sensor unit
- 6: sensor unit
- 7: sensor unit
- 8: surrounding
- 9: windscreen
- 10: road
- 11: lane
- 12: lane
- 13: lane
- 14: receiving unit
- 15: detecting unit
- 16: communication unit
- 17: HMI-unit
- 18: center line
- 19: vehicle
- 20: vehicle
- 21: vehicle
- 22: region of interest
- 23: virtual lane
- 24: determining unit
- 25: left side
- 26: right side
- 27: first preliminary center line
- 28: second preliminary center line
- 29: center line
- 30: trajectory
- 31: trajectory
- 32: trajectory
- 33: lane keeping unit
- 34: output unit
- 35: delineation
- 36: delineation

- A: instructions
- B: instructions
- C: information (answer)
- D: instructions
- E: answer
- L: length
- M1: lateral distance
- M2: lateral distance
- M3: lateral distance
- M_{L}: lateral distance
- M_{R}: lateral distance
- M_{S}: safety distance
- M_{T}: safety distance
- N: longitudinal distance
- O: overlap
- O1: left offset value
- O2: right offset value
- P0: position
- P1: position
- S1-S6: method steps
- T: driving channel
- W_{D}: width
- W_{L}: width
- W_{V}: width

## Claims

1. A method for operating a vehicle (1), comprising the steps:
a) receiving (S1) sensor data (S) of a sensor system (3) of the vehicle (1),
b) detecting (S2) an absence of lane markings based on the sensor data (S),
c) transmitting (S3) instructions (B) to a human machine interface (17) of the vehicle (1) to prompt a driver of the vehicle (1) to drive to a perceived center line (18) of a lane (11),
d) determining (S5) a virtual lane (23) based on the perceived center line (18) to which the driver has driven, and
e) performing (S6) a lane keeping assistant function to keep the vehicle (1) on the virtual lane (23).

2. The method according to claim 1, comprising the step of detecting (S4) a presence of one or more other vehicles (19, 20, 21) in a region of interest (22) based on the sensor data (S), wherein the virtual lane (23) is determined based on positional information (M₁, M_{L}, M_{R}, 30, 31, 32) of the one or more other vehicles (19, 20, 21) with respect to the ego-vehicle (1), the positional information (M₁, M_{L}, M_{R}, 30, 31, 32) being determined based on the sensor data (S).

3. The method according to claim 2, comprising the steps of:
f) determining, after the driver has driven to the perceived center line (18), a driving channel (T) of the ego-vehicle (1) based on the sensor data (S), wherein a length (L) of the driving channel (T) corresponds to a driving distance of the ego-vehicle (1) in a predetermined time span, a width (W_{D}) of the driving channel (T) corresponds to a predetermined vehicle width (W_{V}), and the region of interest (22) includes the driving region (T) at least partly,
g) determining a percentage of an overlap (O) between the determined driving channel (T) and a vehicle (19) detected in the region of interest (22) and preceding the ego-vehicle (1),
h) determining that the preceding vehicle (19) is driving on the same lane (11) as the ego-vehicle (1) and is a preceding target vehicle (19) when the determined percentage of the overlap (O) is above a predetermined value, and
i) determining the virtual lane (23) based on the positional information (M₁, 30) of the preceding target vehicle (19).

4. The method according to claim 3, wherein,
when it is determined that the percentage of the overlap (O) is equal to or below the predetermined value and above a further predetermined value, step c) and steps g) to i) are repeated, the further predetermined value being smaller than the predetermined value, and
when it is determined that the percentage of the overlap (O) is equal to or below the further predetermined value, it is determined that the preceding vehicle (19) is unsuitable for determining the virtual lane (23).

5. The method according to one of claims 2 to 4, comprising the steps of:
determining a lateral distance (M_{L}, M_{R}) between each of the one or more other vehicles (20, 21) detected in the region of interest (22) and the ego-vehicle (1) based on the sensor data (S), the lateral distance (M_{L}, M_{R}) including a left lateral distance (M_{L}) with respect to a left side (25) of the ego-vehicle (1) and a right lateral distance (M_{R}) with respect to a right side (26) of the ego-vehicle (1),
determining that a respective other vehicle (20) is driving on a left neighboring lane (12) with respect to the ego-vehicle (1) and is a left target vehicle (20), when the determined left lateral distance (M_{L}) thereof is above a predetermined threshold, and determining that a respective other vehicle (21) is driving on a right neighboring lane (13) with respect to the ego-vehicle (1) and is a right target vehicle (21), when the determined right lateral distance (M_{R}) thereof is above the predetermined threshold, and
determining the virtual lane (23) based on the positional information (M_{L}, M_{R}, 31, 32) of the left and/or right target vehicles (20, 21) on the left and/or right neighboring lanes (12, 13).

6. The method according to claim 5, wherein determining the virtual lane (23) includes determining a left delineation (35) of the virtual lane (23) based on the positional information (M_{L}, 31) of the left target vehicle (20) and/or determining a right delineation (36) of the virtual lane (23) based on the positional information (M_{R}, 32) of the right target vehicle (21).

7. The method according to one of claims 2 to 6, wherein a center line (29) of the virtual lane (23) is determined based on a first preliminary center line (27) and/or a second preliminary center line (28), the first preliminary center line (27) being derived based on a detected preceding target vehicle (19) and the second preliminary center line (28) being derived based on detected left and/or right target vehicles (20, 21).

8. The method according to claim 7, wherein the center line (29) of the virtual lane (23) is determined based on a mean and/or weighted mean value of the first preliminary center line (27) and the second preliminary center line (28).

9. The method according to claim 7 or 8, wherein,
when a preceding target vehicle (19) is detected, the first preliminary center line (27) of the virtual lane (23) is determined based on a lateral distance (M₁) between the preceding target vehicle (19) and the ego-vehicle (1),
when a left target vehicle (20) and a right target vehicle (21) are detected, the second preliminary center line (28) of the virtual lane (23) is determined such that a lateral distance (M2) between the second preliminary center line (28) and the left target vehicle (20) equals a lateral distance (M3) between the second preliminary center line (28) and the right target vehicle (21), and/or
when a left target vehicle (20) and/or a right target vehicle (21) are detected, the second preliminary center line (28) of the virtual lane (23) is determined such that a lateral distance (M_{L}) between the ego-vehicle (1) and the left target vehicle (20) is above a predetermined safety distance (M_{S}) and/or such that a lateral distance (M_{R}) between the ego-vehicle (1) and the right target vehicle (21) is above the predetermined safety distance (M_{S}).

10. The method according to one of claims 7 to 9, wherein
a lane width (W_{L}) of the virtual lane (23) is determined such that it equals a sum of the predetermined vehicle width (W_{V}), a left offset value (O1) and a right offset value (O2), and
the left offset value (O1) is determined based on the determined lateral distance (M_{L}) between the ego-vehicle (1) and the left target vehicle (20), or
the left offset value (O1) is set equal to a predetermined value, and/or
the right offset value (O2) is determined based on the determined lateral distance (M_{R}) between the ego-vehicle (1) and the right target vehicle (21), or
the right offset value (O2) is set equal to a predetermined value.

11. The method according to one of the previous claims, wherein step c) includes
transmitting instructions (B) to the human machine interface (17) to output a question to the driver if the driver is willing to drive to a perceived center line (18) of a lane (11),
receiving an information (C) of the human machine interface (17) corresponding to an answer of the driver, and
transmitting, when the received information (C) corresponds to a positive answer, instructions (D) to the human machine interface (17) to prompt the driver to confirm that the driver has driven to the perceived center line (18) of the lane (11).

12. The method according to one of the previous claims, comprising the steps of
performing an adaptive cruise control based on a detected preceding target vehicle (19) such that a longitudinal distance (N) between the ego-vehicle (1) and the preceding target vehicle (19) is controlled to have a predetermined distance value, and/or
performing a cruise control based on detected left and/or right target vehicles (20, 21) such that a speed of the ego-vehicle (1) is controlled based on a speed of the left and/or right target vehicles (20, 21).

13. A computer program comprising instructions which, when the program is executed by a computer, cause the computer to carry out the method according to one of the previous claims.

14. A control system (2) for a vehicle (1) which is configured to perform the method according to one of claims 1 to 12.

15. A vehicle (1) comprising a control system (2) according to claim 14.

## Patentansprüche

1. Verfahren zum Betreiben eines Fahrzeugs (1), umfassend die folgenden Schritte:
a) Empfangen (S1) von Sensordaten (S) eines Sensorsystems (3) des Fahrzeugs (1),
b) Detektieren (S2) eines Fehlens von Fahrspurmarkierungen basierend auf den Sensordaten (S),
c) Übertragen (S3) von Anweisungen (B) an eine Mensch-Maschine-Schnittstelle (17) des Fahrzeugs (1), um einen Fahrer des Fahrzeugs (1) aufzufordern, zu einer wahrgenommenen Mittellinie (18) einer Fahrspur (11) zu fahren,
d) Bestimmen (S5) einer virtuellen Fahrspur (23) basierend auf der wahrgenommenen Mittellinie (18), zu der der Fahrer gefahren ist, und
e) Ausführen (S6) einer Fahrspurhalteassistenzfunktion, um das Fahrzeug (1) auf der virtuellen Fahrspur (23) zu halten.

2. Verfahren nach Anspruch 1, umfassend den Schritt des Detektierens (S4) einer Anwesenheit eines oder mehrerer anderer Fahrzeuge (19, 20, 21) in einem Bereich von Interesse (22) basierend auf den Sensordaten (S), wobei die virtuelle Fahrspur (23) basierend auf Positionsinformationen (M₁, M_{L}, M_{R}, 30, 31, 32) des einen oder der mehreren anderen Fahrzeuge (19, 20, 21) in Bezug auf das Ego-Fahrzeug (1) bestimmt wird, wobei die Positionsinformationen (M₁, M_{L}, M_{R}, 30, 31, 32) basierend auf den Sensordaten (S) bestimmt werden.

3. Verfahren nach Anspruch 2, umfassend die folgenden Schritte:
f) Bestimmen eines Fahrkanals (T) des Ego-Fahrzeugs (1) basierend auf den Sensordaten (S), nachdem der Fahrer zu der wahrgenommenen Mittellinie (18) gefahren ist, wobei eine Länge (L) des Fahrkanals (T) einer Fahrstrecke des Ego-Fahrzeugs (1) in einer vorgegebenen Zeitspanne entspricht, eine Breite (W_{D}) des Fahrkanals (T) einer vorgegebenen Fahrzeugbreite (W_{V}) entspricht und der Bereich von Interesse (22) den Fahrbereich (T) zumindest teilweise umfasst,
g) Bestimmen eines Prozentsatzes einer Überlappung (O) zwischen dem bestimmten Fahrkanal (T) und einem Fahrzeug (19), das in dem Bereich von Interesse (22) detektiert wird und dem Ego-Fahrzeug (1) vorausfährt,
h) Bestimmen, dass das vorausfahrende Fahrzeug (19) auf derselben Fahrspur (11) wie das Ego-Fahrzeug (1) fährt und ein vorausfahrendes Zielfahrzeug (19) ist, wenn der bestimmte Prozentsatz der Überlappung (O) über einem vorgegebenen Wert liegt, und
i) Bestimmen der virtuellen Fahrspur (23) basierend auf den Positionsinformationen (M₁, 30) des vorausfahrenden Zielfahrzeugs (19).

4. Verfahren Anspruch 3, wobei,
wenn bestimmt wird, dass der Prozentsatz der Überlappung (O) gleich oder unter dem vorgegebenen Wert ist und über einem weiteren vorgegebenen Wert liegt, Schritt c) und Schritte g) bis i) wiederholt werden, wobei der weitere vorgegebene Wert kleiner als der vorgegebene Wert ist und,
wenn bestimmt wird, dass der Prozentsatz der Überlappung (O) gleich oder unter dem weiteren vorgegebenen Wer ist, bestimmt wird, dass das vorausfahrende Fahrzeug (19) zum Bestimmen der virtuellen Fahrspur (23) ungeeignet ist.

5. Verfahren nach einem der Ansprüche 2 bis 4, umfassend die folgenden Schritte:
Bestimmen eines lateralen Abstands (M_{L}, M_{R}) zwischen jedem des einen oder der mehreren anderen Fahrzeuge (20, 21), die in dem Bereich von Interesse (22) detektiert werden, und dem Ego-Fahrzeug (1) basierend auf den Sensordaten (S), wobei der laterale Abstand (M_{L}, M_{R}) einen linken lateralen Abstand (M_{L}) in Bezug auf eine linke Seite (25) des Ego-Fahrzeugs (1) und einen rechten seitlichen Abstand (M_{R}) in Bezug auf eine rechte Seite (26) des Ego-Fahrzeugs (1) umfasst,
Bestimmen, dass ein jeweiliges anderes Fahrzeug (20) auf einer linken benachbarten Fahrspur (12) in Bezug auf das Ego-Fahrzeug (1) fährt und ein linkes Zielfahrzeug (20) ist, wenn der bestimmte linke laterale Abstand (M_{L}) davon über einem vorgegebenen Schwellenwert liegt, und Bestimmen, dass ein jeweiliges anderes Fahrzeug (21) auf einer rechten benachbarten Fahrspur (13) in Bezug auf das Ego-Fahrzeug (1) fährt und ein rechtes Zielfahrzeug (21) ist, wenn der bestimmte rechte laterale Abstand (M_{R}) davon über dem vorgegebenen Schwellenwert liegt, und
Bestimmen der virtuellen Fahrspur (23) basierend auf den Positionsinformationen (M_{L}, M_{R}, 31, 32) des linken und/oder des rechten Zielfahrzeugs (20, 21) auf der linken und/oder der rechten benachbarten Fahrspur (12, 13).

6. Verfahren nach Anspruch 5, wobei das Bestimmen der virtuellen Fahrspur (23) Bestimmen einer linken Begrenzung (35) der virtuellen Fahrspur (23) basierend auf den Positionsinformationen (M_{L}, 31) des linken Zielfahrzeugs (20) und/oder Bestimmen einer rechten Begrenzung (36) der virtuellen Fahrspur (23) basierend auf den Positionsinformationen (M_{R}, 32) des rechten Zielfahrzeugs (21) umfasst.

7. Verfahren nach einem der Ansprüche 2 bis 6, wobei eine Mittellinie (29) der virtuellen Fahrspur (23) basierend auf einer ersten vorläufigen Mittellinie (27) und/oder einer zweiten vorläufigen Mittellinie (28) bestimmt wird, wobei die erste vorläufige Mittellinie (27) basierend auf einem detektierten vorausfahrenden Zielfahrzeug (19) abgeleitet wird und die zweite vorläufige Mittellinie (28) basierend auf detektierten linken und/oder rechten Zielfahrzeugen (20, 21) abgeleitet wird.

8. Verfahren nach Anspruch 7, wobei die Mittellinie (29) der virtuellen Spur (23) basierend auf einem Mittelwert und/oder gewichteten Mittelwert der ersten vorläufigen Mittellinie (27) und der zweiten vorläufigen Mittellinie (28) bestimmt wird.

9. Verfahren nach Anspruch 7 oder 8, wobei,
wenn ein vorausfahrendes Zielfahrzeug (19) detektiert wird, die erste vorläufige Mittellinie (27) der virtuellen Fahrspur (23) basierend auf einem lateralen Abstand (M₁) zwischen dem vorausfahrenden Zielfahrzeug (19) und dem Ego-Fahrzeug (1) bestimmt wird,
wenn ein linkes Zielfahrzeug (20) und ein rechtes Zielfahrzeug (21) detektiert werden, die zweite vorläufige Mittellinie (28) der virtuellen Fahrspur (23) so bestimmt wird, dass ein lateraler Abstand (M2) zwischen der zweiten vorläufigen Mittellinie (28) und dem linken Zielfahrzeug (20) gleich einem lateralen Abstand (M3) zwischen der zweiten vorläufigen Mittellinie (28) und dem rechten Zielfahrzeug (21) ist, und/oder,
wenn ein linkes Zielfahrzeug (20) und/oder ein rechtes Zielfahrzeug (21) detektiert werden, die zweite vorläufige Mittellinie (28) der virtuellen Fahrspur (23) so bestimmt wird, dass ein lateraler Abstand (M_{L}) zwischen dem Ego-Fahrzeug (1) und dem linken Zielfahrzeug (20) über einem vorgegebenen Sicherheitsabstand (M_{S}) liegt, und/oder so, dass ein lateraler Abstand (M_{R}) zwischen dem Ego-Fahrzeug (1) und dem rechten Zielfahrzeug (21) über dem vorgegebenen Sicherheitsabstand (M_{S}) liegt.

10. Verfahren nach einem der Ansprüche 7 bis 9, wobei eine Fahrspurbreite (W_{L}) der virtuellen Spur (23) so bestimmt wird, dass sie gleich einer Summe aus der vorgegebenen Fahrzeugbreite (W_{V}), einem linken Versatzwert (O1) und einem rechten Versatzwert (O2) ist, und
der linke Versatzwert (O1) basierend auf dem bestimmten lateralen Abstand (M_{L}) zwischen dem Ego-Fahrzeug (1) und dem linken Zielfahrzeug (20) bestimmt wird oder
der linke Versatzwert (O1) gleich einem vorgegebenen Wert gesetzt wird und/oder
der rechte Versatzwert (O2) basierend auf dem bestimmten lateralen Abstand (M_{R}) zwischen dem Ego-Fahrzeug (1) und dem rechten Zielfahrzeug (21) bestimmt wird oder
der rechte Versatzwert (O2) gleich einem vorgegebenen Wert gesetzt wird.

11. Verfahren nach einem der vorhergehenden Ansprüche, wobei Schritt c) Folgendes umfasst:
Übertragen von Anweisungen (B) an die Mensch-Maschine-Schnittstelle (17), um eine Frage an den Fahrer auszugeben, ob der Fahrer bereit ist, zu einer wahrgenommenen Mittellinie (18) einer Fahrspur (11) zu fahren,
Empfangen einer Information (C) der Mensch-Maschine-Schnittstelle (17), die einer Antwort des Fahrers entspricht, und,
wenn die empfangene Information (C) einer positiven Antwort entspricht, Übertragen von Anweisungen (D) an die Mensch-Maschine-Schnittstelle (17), um den Fahrer aufzufordern, zu bestätigen, dass der Fahrer zur wahrgenommenen Mittellinie (18) der Fahrspur (11) gefahren ist.

12. Verfahren nach einem der vorhergehenden Ansprüche, umfassend die folgenden Schritte:
Durchführen einer adaptiven Geschwindigkeitsregelung basierend auf einem detektierten vorausfahrenden Zielfahrzeug (19) so, dass ein Längsabstand (N) zwischen dem Ego-Fahrzeug (1) und dem vorausfahrenden Zielfahrzeug (19) so gesteuert wird, dass er einen vorgegebenen Abstandswert aufweist, und/oder
Durchführen einer Geschwindigkeitsregelung basierend auf detektierten linken und/oder rechten Zielfahrzeugen (20, 21), sodass eine Geschwindigkeit des Ego-Fahrzeugs (1) basierend auf einer Geschwindigkeit der linken und/oder rechten Zielfahrzeuge (20, 21) gesteuert wird.

13. Computerprogrammprodukt, umfassend Anweisungen, die, wenn das Programm von einem Computer ausgeführt wird, den Computer veranlassen, das Verfahren nach einem der vorhergehenden Ansprüche durchzuführen.

14. Steuersystem (2) für ein Fahrzeug (1), das dazu ausgelegt ist, das Verfahren nach einem der Ansprüche 1 bis 12 durchzuführen.

15. Fahrzeug (1), umfassend ein Steuersystem (2) nach Anspruch 14.

## Revendications

1. Procédé de fonctionnement d'un véhicule (1), le procédé comprenant les étapes suivantes :
a) recevoir (S1) des données de capteur (S) d'un système de capteur (3) du véhicule (1),
b) détecter (S2) une absence de marquage de voie sur la base des données du capteur (S),
c) transmettre (S3) des instructions (B) à une interface homme-machine (17) du véhicule (1) pour inviter le conducteur du véhicule (1) à se diriger vers une ligne centrale perçue (18) d'une voie de circulation (11),
d) déterminer (S5) une voie virtuelle (23) sur la base de la ligne centrale perçue (18) vers laquelle le conducteur a conduit, et
e) exécuter (S6) une fonction d'assistant de maintien de voie pour maintenir le véhicule (1) sur la voie virtuelle (23).

2. Procédé selon la revendication 1, comprenant l'étape de détection (S4) de la présence d'un ou plusieurs autres véhicules (19, 20, 21) dans une région d'intérêt (22) sur la base des données de capteur (S), où la voie virtuelle (23) est déterminée sur la base d'informations de position (M₁, M_{L}, M_{R}, 30, 31, 32) des un ou plusieurs autres véhicules (19, 20, 21) par rapport au véhicule ego (1), les informations de position (M₁, M_{L}, M_{R}, 30, 31, 32) étant déterminées sur la base des données de capteur (S).

3. Procédé selon la revendication 2, comprenant les étapes suivantes :
f) déterminer, après que le conducteur a conduit jusqu'à la ligne centrale perçue (18), un canal de conduite (T) du véhicule ego (1) sur la base des données de capteur (S), d'une longueur (1) du canal de conduite (T) correspondant à une distance de conduite du véhicule ego (1) dans un laps de temps prédéterminé, d'une largeur (W_{D}) du canal de conduite (T) correspondant à une largeur de véhicule prédéterminée (W_{V}), et la région d'intérêt (22) comprend la région de conduite (T), au moins partiellement,
g) déterminer un pourcentage de chevauchement (O) entre le canal de conduite déterminé (T) et un véhicule (19) détecté dans la région d'intérêt (22) et précédant le véhicule ego (1),
h) déterminer que le véhicule précédent (19) circule sur la même voie (11) que le véhicule ego (1) et qu'il constitue un véhicule cible précédent (19) lorsque le pourcentage déterminé du chevauchement (O) est supérieur à une valeur prédéterminée, et
i) déterminer la voie virtuelle (23) sur la base des informations de position (M₁, 30) du véhicule cible précédent (19).

4. Procédé selon la revendication 3, dans lequel
lorsqu'il est déterminé que le pourcentage du chevauchement (O) est égal ou inférieur à la valeur prédéterminée et supérieur à une autre valeur prédéterminée, l'étape c) et les étapes g) à i) sont répétées, l'autre valeur prédéterminée étant inférieure à la valeur prédéterminée, et
lorsqu'il est déterminé que le pourcentage du chevauchement (O) est égal ou inférieur à l'autre valeur prédéterminée, il est déterminé que le véhicule précédent (19) n'est pas adapté pour déterminer la voie virtuelle (23).

5. Procédé selon l'une quelconque des revendications 2 à 4, comprenant en outre les étapes suivantes :
déterminer une distance latérale (M_{L}, M_{R}) entre chacun des un ou plusieurs autres véhicules (20, 21) détectés dans la région d'intérêt (22) et le véhicule ego (1) sur la base des données de capteur (S), de la distance latérale (M_{L}, M_{R}) comprenant une distance latérale gauche (M_{L}) par rapport à un côté gauche (25) du véhicule ego (1) et une distance latérale droite (M_{R}) par rapport à un côté droit (26) du véhicule ego (1),
déterminer qu'un autre véhicule respectif (20) circule sur une voie voisine gauche (12) par rapport au véhicule ego (1) et qu'il s'agit d'un véhicule cible gauche (20), lorsque la distance latérale gauche déterminée (M_{L}) de celui-ci est supérieure à un seuil prédéterminé, et déterminer qu'un autre véhicule respectif (21) circule sur une voie voisine droite (13) par rapport au véhicule ego (1) et qu'il s'agit d'un véhicule cible droit (21), lorsque la distance latérale droite déterminée (M_{R}) de celui-ci est supérieure au seuil prédéterminé, et
déterminer la voie virtuelle (23) sur la base des informations de position (M_{L}, M_{R}, 31, 32) des véhicules cibles gauche et/ou droit (20, 21) sur les voies voisines gauche et/ou droite (12, 13).

6. Procédé selon la revendication 5, dans lequel la détermination de la voie virtuelle (23) comprend la détermination d'une délimitation gauche (35) de la voie virtuelle (23) sur la base des informations de position (M_{L}, 31) du véhicule cible gauche (20) et/ou la détermination d'une délimitation droite (36) de la voie virtuelle (23) sur la base des informations de position (M_{R}, 32) du véhicule cible droit (21).

7. Procédé selon l'une des revendications 2 à 6, dans lequel une ligne centrale (29) de la voie virtuelle (23) est déterminée sur la base d'une première ligne centrale préliminaire (27) et/ou d'une deuxième ligne centrale préliminaire (28), la première ligne centrale préliminaire (27) étant dérivée sur la base d'un véhicule cible précédent détecté (19) et la deuxième ligne centrale préliminaire (28) étant dérivée sur la base de véhicules cibles gauche et/ou droit détectés (20, 21).

8. Procédé selon la revendication 7, dans lequel la ligne centrale (29) de la voie virtuelle (23) est déterminée sur la base d'une valeur moyenne et/ou moyenne pondérée de la première ligne centrale préliminaire (27) et de la deuxième ligne centrale préliminaire (28).

9. Procédé selon la revendication 7 ou la revendication 8, dans lequel
lorsqu'un véhicule cible précédent (19) est détecté, la première ligne centrale préliminaire (27) de la voie virtuelle (23) est déterminée sur la base d'une distance latérale (M₁) entre le véhicule cible précédent (19) et le véhicule ego (1),
lorsqu'un véhicule cible gauche (20) et un véhicule cible droit (21) sont détectés, la deuxième ligne centrale préliminaire (28) de la voie virtuelle (23) est déterminée de sorte qu'une distance latérale (M2) entre la deuxième ligne centrale préliminaire (28) et le véhicule cible gauche (20) soit égale à une distance latérale (M3) entre la deuxième ligne centrale préliminaire (28) et le véhicule cible droit (21), et/ou lorsqu'un véhicule cible gauche (20) et/ou un véhicule cible droit (21) sont détectés, la deuxième ligne centrale préliminaire (28) de la voie virtuelle (23) est déterminée de telle sorte qu'une distance latérale (M_{L}) entre le véhicule ego (1) et le véhicule cible gauche (20) soit supérieure à une distance de sécurité prédéterminée (M_{S}) et/ou de telle sorte qu'une distance latérale (M_{R}) entre le véhicule ego (1) et le véhicule cible droit (21) soit supérieure à la distance de sécurité prédéterminée (M_{S}).

10. Procédé selon l'une quelconque des revendications 7 à 9, dans lequel
une largeur de voie (W_{L}) de la voie virtuelle (23) est déterminée de telle sorte qu'elle soit égale à la somme de la largeur de véhicule prédéterminée (W_{V}), d'une valeur de décalage à gauche (O1) et d'une valeur de décalage à droite (O2), et
la valeur de décalage à gauche (O1) est déterminée sur la base de la distance latérale déterminée (M_{L}) entre le véhicule ego (1) et le véhicule cible gauche (20), ou
la valeur de décalage à gauche (O1) est fixée à une valeur prédéterminée, et/ou
la valeur de décalage à droite (O2) est déterminée sur la base de la distance latérale déterminée (M_{R}) entre le véhicule ego (1) et le véhicule cible droit (21), ou
la valeur de décalage à droite (O2) est fixée à une valeur prédéterminée.

11. Procédé selon l'une des revendications précédentes,
dans lequel l'étape c) comprend les étapes suivantes transmettre des instructions (B) à l'interface homme-machine (17) pour émettre en sortie une question au conducteur si celui-ci est disposé à conduire jusqu'à une ligne centrale perçue (18) d'une voie de circulation (11),
recevoir une information (C) de l'interface homme-machine (17) correspondant à une réponse du conducteur, et
transmettre, lorsque les informations reçues (C) correspondent à une réponse positive, des instructions (D) à l'interface homme-machine (17) pour inviter le conducteur à confirmer qu'il a conduit jusqu'à la ligne centrale perçue (18) de la voie de circulation (11).

12. Procédé selon l'une quelconque des revendications précédentes, comprenant en outre les étapes suivantes :
réaliser un contrôle de régulateur de vitesse adaptatif basé sur un véhicule cible précédent détecté (19) de sorte qu'une distance longitudinale (N) entre le véhicule ego (1) et le véhicule cible précédent (19) soit contrôlée pour avoir une valeur de distance prédéterminée, et/ou
réaliser un contrôle de régulateur de vitesse basé sur des véhicules cibles gauche et/ou droit détectés (20, 21) de sorte que la vitesse du véhicule ego (1) soit contrôlée sur la base d'une vitesse des véhicules cibles gauche et/ou droit (20, 21).

13. Programme d'ordinateur comprenant des instructions qui, lorsque le programme est exécuté par un ordinateur, amènent l'ordinateur à mettre en œuvre le procédé selon l'une des revendications précédentes.

14. Système de commande (2) pour un véhicule (1) qui est configuré pour mettre en œuvre le procédé selon l'une des revendications 1 à 12.

15. Véhicule (1) comprenant un système de contrôle (2) selon la revendication 14.
